# EUROPÄISCHE PATENTSCHRIFT

(11) **EP 2 156 924 B1**
(45) Veröffentlichungstag und Bekanntmachung des Hinweises auf die Patenterteilung: **05.01.2011**
(21) Anmeldenummer: 09165539.9
(22) Anmeldetag: 15.07.2009
(51) Int. Cl.: B23Q 17/00

(54) **Arbeitsspindel mit einer Vorrichtung zur Überwachung der Lage eines Werkzeugs oder Werkzeugträgers an der Arbeitsspindel**
Work spindle with a device for monitoring the location of a tool or tool holder on the work spindle
Broche avec un dispositif de surveillance de la position d'un outil ou d'un porte-outil sur la broche

(30) Priorität: 21.08.2008 DE 102008039023
(43) Veröffentlichungstag der Anmeldung: 24.02.2010
(73) Patentinhaber: Ott-Jakob Spanntechnik GmbH, 87663 Lengenwang (DE)
(72) Erfinder: Gast, Stephan, 86987 Schwabsoien (DE); Greif, Josef, 87654 Friesenried (DE); Hörger, Winfried, 87675 Stötten am Auerberg (DE); Bechteler, Wolfgang, 87640 Ebenhofen (DE); Bonerz, Stefan, 87616 Marktoberdorf (DE)
(74) Vertreter: Charrier, Rapp & Liebau

(56) Entgegenhaltungen:
- DE-A1- 4 344 264
- US-A- 4 909 521

## Beschreibung

Die Erfindung betrifft eine Arbeitsspindel mit einer Vorrichtung zur Überwachung der Lage eines Werkzeugs oder Werkzeugträgers an der Arbeitsspindel nach dem Oberbegriff des Anspruchs 1.

Bei Werkzeugmaschinen kann durch Verschmutzungen an den Werkzeugauflageflächen eine suboptimale Werkzeugspannung hervorgerufen werden. Verschmutzungen können insbesondere aus Materialspänen bestehen, die bei der Bearbeitung eines Werkstücks zwangsläufig anfallen. Folglich kann es aufgrund einer Schiefstellung bzw. eines Achsversatzes des Werkzeugs zu einer mangelhaften Bearbeitung kommen. Dieser Effekt wird noch verstärkt durch den Einsatz von langen Werkzeugen. Zur Verbesserung der Fertigungsqualität und Reduktion des Ausschussanteils ist es wünschenswert, das Auftreten einer fehlerhaften Werkzeugspannung bereits vor Beginn der Bearbeitung erkennen zu können. Daher wurde bereits vorgeschlagen, bei Werkzeugmaschinen die Qualität der Werkzeugspannung durch eine Überwachung der Plananlage des Werkzeugs zu überprüfen.

Ein bekanntes Konzept ist die Überwachung der Werkzeugplananlage mittels Druckluft. Hierfür wird ein Druckluftsystem verwendet, welches bei einem Werkzeugwechsel aktiviert wird. Eine optimale Werkzeugspannung führt zu einem Druckaufbau im Hohlraumbereich des Werkzeugspanners, während eine fehlerhafte Werkzeugspannung keinen oder nur einen geringen Druckaufbau zulässt. Die Korrektheit der Werkzeugspannung kann anhand einer Druckmessung detektiert werden. Voraussetzung ist jedoch ein System von Luftkanälen in der Arbeitsspindel bzw. dem Werkzeugspanner sowie eine entsprechende Druckluftversorgung.

Die DE 103 51 347 A1 beschreibt die Überwachung der an der Spannvorrichtung einer Werkzeugmaschine auftretenden Kräfte mittels druck-, spannungs- oder kraftsensibler Sensorik. Das hier verfolgte Ziel liegt in der gleichzeitigen Überwachung der korrekten Werkzeugspannung und der während der Bearbeitung auftretenden Kräfte, um Prozessparameter bei der Bearbeitung optimieren zu können. Hierzu müssen die Sensoren so in die Spannvorrichtung integriert sein, dass sie in den dort während der Bearbeitung auftretenden Kraftfluss einbezogen sind. Auf die Art der einzusetzenden Sensoren legt sich die Schrift nicht fest.

Die DE 199 59 778 A1 lehrt die Verwendung eines Telemetriesystems mit abstandsmessender Sensorik zur gleichzeitigen Kontrolle des Spannzustandes und der Plananlage der Werkzeugaufnahme an der Spindel. Über die Ausgestaltung der Sensorik und der Telemetrieeinheit enthält die Schrift jedoch keine näheren Angaben. Von diesem Stand der Technik geht die vorliegende Erfindung aus.

Die DE 103 29 561 A1 offenbart eine sensorintegrierte Werkzeugaufnahme zur Bestimmung der Schnittkräfte, die bei der Bearbeitung eines Werkstücks an der Kontaktstelle zwischen Werkzeug und Werkstück auftreten. Hierbei werden die radialen Schnittkräfte durch auf einem Verformungsbereich abhängig von dessen Abmessungen geeignet angebrachte Dehnungsmessstreifen bestimmt. Letztere sind miteinander zu einer Brückenschaltung verschaltet, um eine der gesuchten Schnittkraft proportionale Ausgangsspannung zu erzeugen.

Die DE 43 44 264 A1 zeigt einen Positionsdetektor zur Feststellung, ob ein Werkstück auf einer Referenzfläche angeordnet ist, durch Feststellung eines Gegendruckes einer Düse, von der ein unter Druck stehendes Fluid auf die Oberfläche des Werkstücks gestrahlt wird. Die Feststellung des Gegendruckes erfolgt durch einen Ein-Chip-Halbleiterdrucksensor, der intern eine Brückenschaltung von Messwiderständen enthält.

Die Aufgabe der Erfindung ist es, zur Überwachung der Plananlage eines Werkzeugs oder Werkzeugträgers an einer Arbeitsspindel eine neue und zweckmäßige Lösung zu schaffen, die einfach und kostengünstig realisierbar ist.

Diese Aufgabe wird erfindungsgemäß durch eine Arbeitsspindel mit den Merkmalen des Anspruchs 1 gelöst. Vorteilhafte Ausgestaltungen sind in den Unteransprüchen angegeben.

Die Erfindung sieht eine rein passive Sensorik auf der Basis einer Brückenschaltung vor, bei der eine elektrische Kenngröße mindestens eines in einem ihrer Zweige enthaltenen passiven elektrischen Sensorelementes von der Anlage des Werkzeugs oder Werkzeugträgers an der Arbeitsspindel beeinflusst wird, so dass eine Abweichung der Position des Werkzeugs oder Werkzeugträgers von einer planen Anlage an der Arbeitsspindel zu einer Verstimmung der Brückenschaltung führt. Dazu ist im Gegensatz zum vorausgehend erwähnten Stand der Technik weder pneumatische Hilfsenergie nötig, noch spielt der Kraftfluss in der Spannvorrichtung eine Rolle. Die Erfindung konzentriert sich ganz auf die Feststellung der Plananlage des Werkzeugs oder Werkzeugträgers an der Arbeitsspindel und kommt mit vergleichsweise einfachen und kostengünstigen Mitteln aus.

Als Effekte, durch welche eine innerhalb einer Brückenschaltung elektrisch wirksame Kenngröße eines Sensorelementes beeinflusst werden kann, können alternativ die Änderung eines Widerstandes durch den galvanischen Kontakt zwischen spindelseitigen Elektroden und dem Werkzeug oder Werkzeugträger, die Änderung einer Induktivität durch die Permeabilität des Werkzeugs oder Werkzeugträgers oder die Änderung einer Kapazität durch Verwendung des Werkzeugs oder Werkzeugträgers als Kondensatorelektrode genutzt werden.

Nachfolgend werden Ausführungsbeispiele der Erfindung unter Bezugnahme auf die Zeichnungen beschrieben. In diesen zeigt
- Fig . 1: eine Vorderansicht einer Arbeitsspindel mit Werkzeugauflageflächen,
- Fig. 2: eine schematische Teillängsschnittansicht einer fehlerhaften Werkzeugspannung,
- Fig. 3: eine erfindungsgemäße Sensorschaltung mit kapazitiver Stator-Rotor-Kopplung,
- Fig. 4: eine erfindungsgemäße Sensorschaltung mit induktiver Stator-Rotor-Kopplung,
- Fig. 5: ein elektrisches Ersatzschaltbild der Schaltung nach Fig. 4 und
- Fig. 6: die qualitative Abhängigkeit der Eingangsimpedanz der Ersatzschaltung nach Fig. 5 vom Kopplungsfaktor k und der Sensorkapazität.

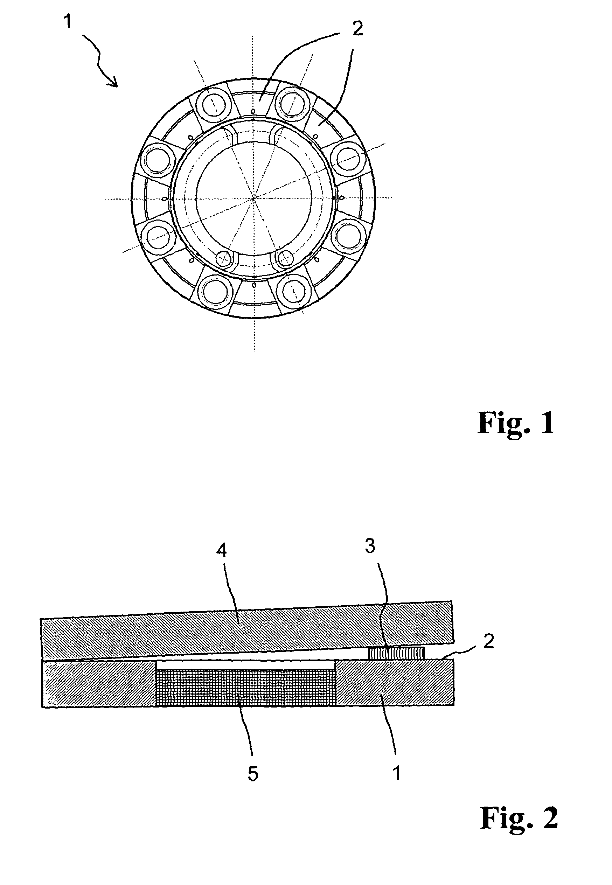

Fig. 1 zeigt die Vorderansicht einer Arbeitsspindel 1, die Bestandteil einer nicht dargestellten Bearbeitungsmaschine, insbesondere einer Werkzeugmaschine ist. Die Arbeitsspindel 1 weist an ihrer Stirnseite mehrere Auflageflächen 2 auf, an denen ein Werkzeug oder ein Werkzeugträger im gespannten Zustand plan aufliegen soll. Diese Auflageflächen 2 liegen genau planparallel zueinander in einer einzigen Ebene. Zur Verwendung an der Arbeitsspindel 1 bestimmte Werkzeuge oder Werkzeugträger, wobei letztere ihrerseits verschiedene Werkzeuge aufnehmen können, weisen an ihrer Rückseite ebenfalls entsprechende stirnseitige Auflageflächen auf. Bei einer planen Anlage der werkzeugseitigen bzw. werkzeugträgerseitigen Auflageflächen an den spindelseitigen Auflageflächen 2 verläuft die Längsachse des Werkzeugs bzw. Werkzeugträgers genau parallel zur Längsachse der Arbeitsspindel 1. Die Zentrierung des Werkzeugs bzw. Werkzeugträgers bezüglich der Arbeitsspindel 1 erfolgt durch kegelförmige Auflageflächen im Inneren der Arbeitsspindel 1.

Im Fall einer Verschmutzung einer der Auflageflächen 2 ist keine plane Anlage des Werkzeugs oder Werkzeugträgers an der Arbeitsspindel 1 mehr möglich. Insbesondere kann eine solche Verschmutzung durch bei der Bearbeitung eines Werkstücks anfallende Späne erfolgen. Schematisch ist eine solche Situation in Fig. 2 dargestellt. Auf dem rechten Teil der Auflagefläche 2 liegt ein Span 3, der beim Spannen des Werkzeugs 4 an der Arbeitsspindel 1 zwischen dieser und dem Werkzeug 4 eingeklemmt wird und dafür sorgt, dass ein keilförmiger Spalt zwischen beiden besteht. Bei der Bearbeitung eines Werkstücks mit einem solchermaßen schrägstehenden Werkzeug 4 ist kein maßhaltiges Ergebnis, sondern Ausschuss zu erwarten.

Erfindungsgemäß sind an einigen Auflageflächen 2 Sensorelemente 5 vorgesehen, bei denen jeweils eine elektrische Kenngröße vom Anlagezustand eines Werkzeugs 4 oder Werkzeugträgers an der Auflagefläche 2 beeinflusst wird. In Fig. 2 ist das dortige Sensorelement 5 gegenüber der Auflagefläche 2 ein wenig zurückversetzt, so dass bei korrekt planer Anlage des Werkzeugs 4 an der Auflagefläche 2 ein definierter Abstand zwischen dem Werkzeug 4 und dem Sensorelement 5 besteht. Dies ist insbesondere dann möglich und sinnvoll, wenn es sich um ein kapazitives oder induktives Sensorelement 5 handelt. Es könnte jedoch auch ein resistives Sensorelement verwendet werden, welches bei korrekt planer Anlage des Werkzeugs 4 an der Auflagefläche 2 einen galvanischen Kontakt zwischen beiden benötigt. In diesem Fall müsste das Sensorelement bündig mit der Auflagefläche 2 abschließen.

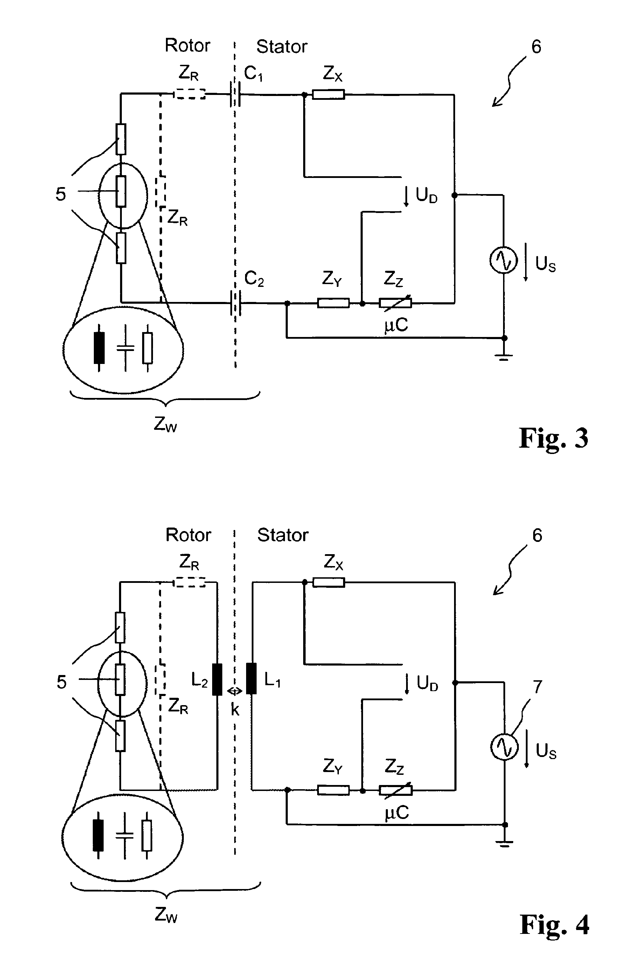

Ein erstes Beispiel für eine Schaltung zur Detektion einer Abweichung der Sollposition eines Werkzeugs 4 oder Werkzeugträgers gegenüber einem oder mehreren Sensorelementen 5 zeigt Fig. 3. Es handelt sich um eine Brückenschaltung 6, die von einer Spannungsquelle 7 mit einer sinusförmigen Spannung U_{S} von konstanter Frequenz gespeist wird. Die Diagonalspannung der Brückenschaltung 6 ist als U_{D} gekennzeichnet. Drei der vier Zweige der Brückenschaltung 6, nämlich die Impedanzen Z_{X}, Z_{Y} und Z_{Z} befinden sich außerhalb der Arbeitsspindel 1 und führen daher beim Betrieb derselben keine Rotationsbewegung aus.

Der vierte Zweig der Brückenschaltung 6, wird durch die Zusammenschaltung von drei untereinander gleichen Sensorelementen 5 und einer Anpassungsimpedanz Z_{R} die alle in der rotierenden Arbeitsspindel angeordnet sind, sowie von zwei Koppelkapazitäten C₁ und C₂ zu einer Gesamtimpedanz Z_{W} gebildet. Die Koppelkapazitäten C₁ und C₂ schaffen eine drehbewegliche elektrische Verbindung durch kapazitive Kopplung einander in definiertem Abstand gegenüberliegender Elektroden, bei denen es sich insbesondere um konzentrische Ringe handeln kann. In Fig. 3 symbolisiert die durch die beiden Kapazitäten C₁ und C₂ verlaufende senkrechte gestrichelte Linie die Schnittstelle zwischen dem als Rotor gekennzeichneten rotierenden Teil der Brückenschaltung 6 und dem als Stator gekennzeichneten feststehenden Teil.

Wie in Fig. 3 durch die Vergrößerung des mittleren Sensorelements 5 angedeutet ist, kann ein Sensorelement 5 induktiver, kapazitiver oder resistiver Art sein, wobei die vergrößert dargestellten Elemente als Alternativen gemeint sind. Die Anzahl von drei Sensorelementen 5 zielt darauf ab, eine zuverlässige Anzeige der Plananlage des Werkzeugs 4 oder Werkzeugträgers an der Arbeitsspindel 1 anhand einer Messung an drei verschiedenen räumlich verteilten Orten zu erhalten. Dabei sind die einzelnen Sensorelemente 5 äquidistant entlang eines Kreises angeordnet. Es könnten auch mehr als drei Sensorelemente 5 verwendet werden, doch sind drei Sensorelemente 5 für die eindeutige Bestimmung der Lage des Werkzeugs 4 oder Werkzeugträgers zur Stirnfläche der Arbeitsspindel 1 ausreichend.

Im Fall eines induktiven Sensorelements 5 kann insbesondere vorgesehen sein, dass das Werkzeug 4 oder der Werkzeugträger aufgrund der magnetischen Permeabilität seines metallischen Werkstoffs die Induktivität einer Spule bei Annäherung an dieselbe beeinflusst, so dass ein bestimmter Wert der Induktivität nur bei einer korrekten Plananlage des Werkzeugs 4 oder Werkzeugträgers an der Arbeitsspindel 1 gegeben ist. Dabei kann die normale Permeabilität des Materials genutzt werden oder es können in das Werkzeug 4 oder den Werkzeugträger an denjenigen Stellen, welche im gespannten Zustand einem Sensorelement 5 gegenüberliegen, Stücke aus hochpermeablem Material integriert sein. Bei einer Parallelschaltung von drei Spulen wird die Gesamtinduktivität von der kleinsten Teilinduktivität bestimmt, so dass sich in diesem Fall eine große Empfindlichkeit der Gesamtinduktivität gegenüber der Plananlage des Werkzeugs 4 oder Werkzeugträgers an der Arbeitsspindel 1 ergibt.

Im Fall eines kapazitiven Sensorelements 5 kann insbesondere vorgesehen sein, dass das Werkzeug 4 oder der Werkzeugträger aufgrund seiner metallischen Leitfähigkeit als jeweilige Gegenelektrode von in die Arbeitsspindel 1 integrierten Kondensatorelektroden sowie als elektrische Verbindung zwischen diesen Gegenelektroden fungiert. Bei drei Sensorelementen 5, wie sie Fig. 4 zeigt, sind somit drei Kondensatoren in Reihe geschaltet, deren Kapazität jeweils vom Elektrodenabstand abhängt. Durch eine Fehlstellung der in Fig. 2 gezeigten Art wird folglich die Gesamtkapazität der drei Kondensatoren merklich verringert.

Im Fall eines resistiven Sensorelements 5 können beispielsweise leitfähige Verbindungen zwischen in der Arbeitsspindel 1 gegeneinander isoliert angeordneten Elektroden und dem Werkzeug 4 oder Werkzeugträger vorgesehen sein, um den Stromkreis des Zweiges mit der Gesamtimpedanz Z_{W} zu schließen. Eine Verschmutzung außerhalb der Elektrodenflächen würde diesen Stromkreis unabhängig von einer eventuellen Leitfähigkeit der Verschmutzung ganz unterbrechen, während eine Verschmutzung in Form eines leitfähigen Spanes 5 im Bereich der Elektrodenflächen den Stromkreis zwar nicht ganz unterbrechen, aber in seinem Widerstand verändern und somit ebenfalls eine Detektion der Schrägstellung des Werkzeugs 4 oder Werkzeugträgers erlauben würde.

Die Sensoren könnten aber auch als federbelastete Taster ausgebildet sein, die im Falle einer korrekten Plananlage des Werkzeugs 4 oder Werkzeugträgers an den Auflageflächen 2 der Arbeitsspindel 1 alle durch mechanische Kraftbeaufschlagung geöffnet werden und dadurch eine vorbestimmte Gesamtimpedanz Z_{W} herbeiführen. Im Fall einer Fehlstellung des Werkzeugs 4 oder Werkzeugträgers infolge einer Verschmutzung im Sinne von Fig. 2 wird dann mindestens ein Taster nicht geöffnet, wodurch ein Teil der normalen Gesamtimpedanz Z_{W} kurzgeschlossen bleibt und sich für Zw ein vom Sollwert abweichender Wert ergibt und die Brückenschaltung 6 verstimmt wird.

Vorzugsweise wird die Brückenschaltung 6 bei einer Frequenz betrieben, bei der sie sich im Falle einer korrekten Plananlage des Werkzeugs 4 oder Werkzeugträgers an den Auflageflächen 2 der Arbeitsspindel 1 in Resonanz befindet. Eine Verstimmung der Brückenschaltung 6 führt zur Verletzung der Resonanzbedingung und damit zu einer besonders ausgeprägten Änderung der Diagonalspannung U_{D}. Damit die Gesamtimpedanz Z_{W} des mit Sensorelementen 5 bestückten Zweiges der Brückenschaltung 6 den zur Erfüllung der Resonanzbedingung benötigten Wert hat, kann je nach Art des Sensorelements 5 die Reihen-oder Parallelschaltung einer Anpassungsimpedanz Z_{R} notwendig sein, die in Fig. 3 gestrichelt eingezeichnet ist. Die beiden Darstellungen von Z_{R} in Fig. 3 sind als Alternativen zueinander zu verstehen.

Fig. 4 zeigt alternativ zu der kapazitiven Kopplung nach Fig. 3 eine induktive Kopplung zwischen dem feststehenden und dem rotierenden Teil der Brückenschaltung 6 durch zwei Induktivitäten L₁ und L₂. Die vorausgehenden Ausführungen zu der kapazitiv gekoppelten Schaltung von Fig. 3 gelten in analoger Weise auch für die induktiv gekoppelte Schaltung von Fig. 4. Es versteht sich, dass die aus den Sensoren 5 und der Anpassungsimpedanz Z_{R} bestehende Konfiguration nach Art der Impedanzen (induktiv/kapazitiv) und Art der Zusammenschaltung (seriell/parallel) bei einer induktiven Kopplung zwischen Rotor und Stator, wie sie Fig. 4 zeigt, nicht identisch mit der Konfiguration bei kapazitiver Kopplung nach Fig. 3 sein kann, sondern eine geeignete Modifikation erfordert, um die Abgleich- und die Resonanzbedingung erfüllen zu können.

Der Feinabgleich der Brückenschaltung auf die Diagonalspannung Null bei perfekter Plananlage des Werkzeugs 4 oder Werkzeugträgers an den Auflageflächen 2 der Arbeitsspindel 1 erfolgt durch eine Variation einer der Impedanzen des feststehenden Teils der Brückenschaltung 6, nämlich derjenigen Impedanz Z_{Z}, welche dem mit Sensorelementen 5 bestückten Zweig diagonal gegenüberliegt, durch einen Mikrocontroller µC, wie es in Fig. 3 und Fig. 4 jeweils angedeutet ist.

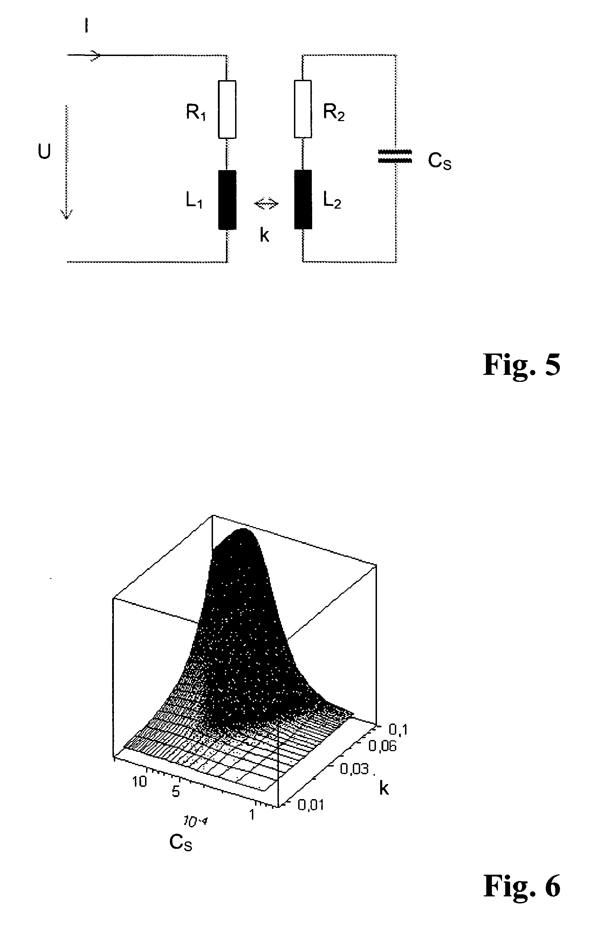

Fig. 5 zeigt ein Ersatzschaltbild des mit Sensorelementen 5 bestückten Zweiges der Brückenschaltung 6 für den Fall, dass kapazitive Sensorelemente 5 eingesetzt werden, die zusammen eine Kapazität C_{S} haben, und dass eine induktive Kopplung entsprechend Fig. 4 vorgesehen ist. Die Widerstände R₁ und R₂ beinhalten die Wicklungswiderstände des aus den Induktivitäten L₁ und L₂ bestehenden Übertragers mit dem Kopplungsfaktor k. Das Verhältnis zwischen der Spannung U und dem Strom I entspricht der Gesamtimpedanz Zw des Brückenzweiges. Vereinfachend wurde angenommen, dass auf dem Rotor keine zusätzliche Anpassungsimpedanz Z_{R} benötigt wird.

In Fig. 6 ist die Abhängigkeit des Betrages der Impedanz Z_{W} über den Werten des Kopplungsfaktors k und der Kapazität C_{S} dargestellt, wobei für die Bauelemente R₁, R₂, L₁, L₂ und C_{S} beispielhaft bestimmte Werte angenommen wurden. Man erkennt, dass der Betrag von Z_{W} stark vom Wert der Kapazität C_{S} abhängt, sofern der Kopplungsfaktor k nicht allzu klein ist. Damit hängt auch der Abgleich der Brückenschaltung 6 stark vom Wert der Kapazität C_{S} ab, die ihrerseits von der Präsenz und der Plananlage eines Werkzeugs 4 oder Werkzeughalters an der Arbeitsspindel 1 beeinflusst wird. Die Empfindlichkeit gegenüber Variationen des Wertes der Kapazität C_{S} wird durch den Betrieb der Brückenschaltung 6 in Resonanz noch erhöht. Auch geringfügige Abweichungen des Werkzeugs 4 oder Werkzeughalters von der korrekten Plananlage an der Arbeitsspindel 1 können somit anhand der Diagonalspannung U_{D} der Brückenschaltung 6 zuverlässig detektiert werden.

## Patentansprüche

1. Arbeitsspindel (1) mit einer Vorrichtung zur Überwachung der Lage eines Werkzeugs (4) oder Werkzeugträgers an der Arbeitsspindel (1), wobei die Vorrichtung mindestens ein elektrisches Sensorelement (5) aufweist, welches an oder in der Arbeitsspindel (1) dergestalt angeordnet ist, dass es von der Anlage des Werkzeugs (4) oder Werkzeugträgers an der Arbeitsspindel (1) beeinflusst wird, **dadurch gekennzeichnet, dass** es sich um ein passives elektrisches Sensorelement (5) handelt, dass eine elektrische Kenngröße des Sensorelementes (5) von der Anlage des Werkzeugs (4) oder Werkzeugträgers an der Arbeitsspindel (1) beeinflusst wird, dass das Sensorelement (5) in einen Zweig einer Brückenschaltung (6) geschaltet ist, welche bei planer Anlage des Werkzeugs (4) oder Werkzeugträgers an der Arbeitsspindel (1) abgeglichen ist und bei einer Abweichung der Position des Werkzeugs (4) oder Werkzeugträgers von einer planen Anlage an der Arbeitsspindel (1) verstimmt ist, und dass mindestens drei Sensorelemente (5) räumlich über die Stirnseite der Arbeitsspindel (1) verteilt angeordnet und innerhalb eines Zweiges der Brückenschaltung (6) zusammengeschaltet sind.

2. Arbeitspindel nach Anspruch 1, **dadurch gekennzeichnet, dass** das Sensorelement (5) ein ohmscher Widerstand ist, dessen Wert durch einen elektrischen Kontakt zwischen Elektroden an oder in der Arbeitsspindel (1) und dem Werkzeug (4) oder Werkzeugträger beeinflusst wird.

3. Arbeitspindel nach Anspruch 2, **dadurch gekennzeichnet, dass** an oder in einer Anlagefläche (2) der Arbeitsspindel (1) mehrere Elektroden vorgesehen sind, die durch das Werkzeug (4) oder den Werkzeugträger bei planer Anlage desselben an der Arbeitsspindel (1) galvanisch miteinander verbunden werden.

4. Arbeitspindel nach Anspruch 2, **dadurch gekennzeichnet, dass** das Sensorelement (5) ein elektrischer Taster mit einem an oder in einer Anlagefläche (2) der Arbeitsspindel (1) angeordneten Betätigungselement ist, welches durch das Werkzeug (4) oder den Werkzeugträger bei dessen Kontakt mit der Arbeitsspindel (1) mechanisch betätigt wird.

5. Arbeitspindel nach Anspruch 1, **dadurch gekennzeichnet, dass** das Sensorelement (5) eine Induktivität ist, deren Wert durch den Abstand zwischen der Arbeitsspindel (1) und dem Werkzeug (4) oder Werkzeugträger aufgrund der magnetischen Permeabilität des Werkzeugs (4) oder Werkzeugträgers beeinflusst wird.

6. Arbeitspindel nach Anspruch 1, **dadurch gekennzeichnet, dass** das Sensorelement (5) eine Kapazität ist, deren Wert durch den Abstand zwischen der Arbeitsspindel (1) und dem Werkzeug (4) oder Werkzeugträger beeinflusst wird, wobei das Werkzeug (4) oder der Werkzeugträger als eine der Elektroden der Kapazität fungiert.

7. Arbeitspindel nach einem der Ansprüche 1 bis 6, **dadurch gekennzeichnet, dass** die Frequenz der Speisespannung der Brückenschaltung (6) so gewählt ist, dass sich die Brückenschaltung (6) bei planer Anlage des Werkzeugs (4) oder Werkzeugträgers an der Arbeitsspindel (1) in Resonanz befindet.

8. Arbeitspindel nach einem der Ansprüche 1 bis 7, **dadurch gekennzeichnet, dass** ein Teil der Brückenschaltung (6), welcher zumindest die zur Speisung vorgesehene Energiequelle (7) und den Abgriff der Diagonalspannung umfasst, außerhalb der Arbeitsspindel (1) angeordnet ist, und dass eine drehbewegliche elektrische Verbindung zu dem in der Arbeitsspindel (1) angeordneten Teil der Brückenschaltung (6) durch eine kapazitive oder induktive Kopplung vorgesehen ist.

## Claims

1. Work spindle (1) with a device for monitoring the position of a tool (4) or tool holder on the work spindle (1), wherein the device exhibits at least one electric sensor element (5) which is arranged on or in the work spindle (1) such that it is influenced by the bearing of the tool (4) or tool holder on the work spindle (1), **characterised in that** it is a passive electric sensor element (5), **in that** an electrical parameter of the sensor element (5) is influenced by the bearing of the tool (4) or tool holder on the work spindle (1), **in that** the sensor element (5) is connected into one branch of a bridge circuit (6) which is balanced when the tool (4) or tool holder bears flat on the work spindle (1), and is out of balance when the position of the tool (4) or tool holder deviates from bearing flat on the work spindle (1), and **in that** at least three sensor elements (5) are arranged distributed spatially over the end of the work spindle (1) and connected together within one branch of the bridge circuit (6).

2. Work spindle according to claim 1, **characterised in that** the sensor element (5) is an ohmic resistor, the value of which is influenced by an electrical contact between electrodes on or in the work spindle (1) and the tool (4) or tool holder.

3. Work spindle according to claim 2, **characterised in that** a plurality of electrodes which are connected
galvanically to one another by the tool (4) or the tool holder when it bears flat on the work spindle (1) are provided on or in a bearing face (2) of the work spindle (1).

4. Work spindle according to claim 2, **characterised in that** the sensor element (5) is an electric feeler with an actuating element which is arranged on or in a bearing face (2) of the work spindle (1) and actuated mechanically by the tool (4) or the tool holder when it makes contact with the work spindle (1).

5. Work spindle according to claim 1, **characterised in that** the sensor element (5) is an inductance, the value of which is influenced by the distance between the work spindle (1) and the tool (4) or tool holder due to the magnetic permeability of the tool (4) or tool holder.

6. Work spindle according to claim 1, **characterised in that** the sensor element (5) is a capacitor, the value of which is influenced by the distance between the work spindle (1) and the tool (4) or tool holder, the tool (4) or tool holder functioning as one of the electrodes of the capacitor.

7. Work spindle according to one of claims 1 to 6, **characterised in that** the frequency of the feeding voltage of the bridge circuit (6) is chosen so that the bridge circuit (6) is in a resonant state when the tool (4) or tool holder bears flat on the work spindle (1).

8. Work spindle according to one of claims 1 to 7, **characterised in that** a part of the bridge.circuit (6) which comprises at least the power source (7) provided for the feed and the tap for the diagonal voltage, is arranged outside the work spindle (1), and **in that** a rotating moving electrical connection to the part of the bridge circuit (6) arranged in the work spindle (1) is provided by a capacitive or inductive coupling.

## Revendications

1. Broche de travail (1) avec un dispositif pour surveiller la position d'un outil (4) ou d'un porte-outil sur la broche de travail (1), le dispositif présentant au moins un élément capteur électrique (5), lequel est disposé sur ou dans la broche de travail (1) de façon à être influencé par l'appui de l'outil (4) ou du porte-outil sur la broche de travail (1), **caractérisée en ce qu'**il s'agit d'un élément capteur électrique (5) passif, qu'un paramètre électrique de l'élément capteur (5) est influencé par l'appui de l'outil (4) ou du porte-outil sur la broche de travail (1), que l'élément capteur (5) est monté dans une branche d'un circuit en pont (6) qui est équilibré en cas d'appui plan de l'outil (4) ou du porte-outil sur la broche de travail (1) et désaccordé en cas d'écart de la position de l'outil (4) ou du porte-outil par rapport à un appui plan sur la broche de travail (1), et qu'au moins trois éléments capteurs (5) sont disposés spatialement sur la face frontale de la broche de travail (1) et interconnectés à l'intérieur d'une branche du circuit en pont (6).

2. Broche de travail selon la revendication 1, **caractérisée en ce que** l'élément capteur (5) est une résistance ohmique dont la valeur est influencée par un contact électrique entre des électrodes sur ou dans la broche de travail (1) et l'outil (4) ou le porte-outil.

3. Broche de travail selon la revendication 2, **caractérisée en ce que** plusieurs électrodes sont prévues sur ou dans une surface d'appui (2) de la broche de travail (1), lesquelles sont reliées entre elles galvaniquement à travers l'outil (4) ou le porte-outil en cas d'appui plan de celui-ci sur la broche de travail (1).

4. Broche de travail selon la revendication 2, **caractérisée en ce que** l'élément capteur (5) est un bouton-poussoir électrique avec un élément d'actionnement disposé sur ou dans une surface d'appui (2) de la broche de travail (1), lequel est actionné mécaniquement par l'outil (4) ou le porte-outil lors de son contact avec la broche de travail (1).

5. Broche de travail selon la revendication 1, **caractérisée en ce que** l'élément capteur (5) est une inductance dont la valeur est influencée par la distance entre la broche de travail (1) et l'outil (4) ou le porte-outil en raison de la perméabilité magnétique de l'outil (4) ou du porte-outil.

6. Broche de travail selon la revendication 1, **caractérisée en ce que** l'élément capteur (5) est une capacité dont la valeur est influencée par la distance entre la broche de travail (1) et l'outil (4) ou le porte-outil, l'outil (4) ou le porte-outil faisant fonction d'une des électrodes de la capacité.

7. Broche de travail selon une des revendications 1 à 6, **caractérisée en ce que** la fréquence de la tension d'alimentation du circuit en pont (6) est choisie de façon que le circuit en pont (6) se trouve à la résonance en cas d'appui plan de l'outil (4) ou du porte-outil sur la broche de travail (1).

8. Broche de travail selon une des revendications 1 à 7, **caractérisée en ce qu'**une partie du circuit en pont (6), laquelle comprend au moins la source d'énergie (7) prévue pour l'alimentation et la prise de la tension diagonale, est disposée à l'extérieur de la broche de travail (1), et qu'il est prévu une liaison électrique mobile en rotation vers la partie du circuit en pont (6) disposée dans la broche de travail (1) par un couplage capacitif ou inductif.
